## Europäisches Patentamt

## European Patent Office

## Office européen des brevets

(11) Veröffentlichungsnummer: **0 092 075**
**A1**

(12) **EUROPÄISCHE PATENTANMELDUNG**

(21) Anmeldenummer: **83103142.2**

(22) Anmeldetag: **30.03.83**

(51) Int. Cl.³: **A 45 D 44/02,** H 04 N 5/22

(30) Priorität: **15.04.82  DE 3213806**

(43) Veröffentlichungstag der Anmeldung: **26.10.83**
**Patentblatt 83/43**

(84) Benannte Vertragsstaaten: **AT BE CH FR GB IT LI LU NL
SE**

(71) Anmelder: **Friesen, Dorita, Schönblickstrasse 33,
D-7024 Filderstadt 4 (DE)**

(72) Erfinder: **Friesen, Dorita, Schönblickstrasse 33,
D-7024 Filderstadt 4 (DE)**

(74) Vertreter: **Rüger, Rudolf, Dr.-Ing.,
Webergasse 3 Postfach 348, D-7300 Esslingen/Neckar
(DE)**

(54) **Haartrachtsimulator.**

(57)   Ein Haartrachtsimulator (1) für Friseure zur Beurteilung
des ästhetischen Zusammenwirkens von Gesichtern und
Kopffrisuren oder Bärten enthält eine Einrichtung (2) zur
Aufnahme und Darstellung des jeweiligen Gesichtes, auf
der gleichzeitig eine in einem Magazin (7) gespeicherte
Frisur lagerichtig um das Gesicht herum angeordnet darstellbar ist. Es ist ferner eine Einrichtung vorgesehen, um
die Größen von Gesicht und Frisur aneinander anzupassen.

## Haartrachtsimulator

Die Erfindung betrifft einen Haartrachtsimulator für Friseure zur Beurteilung des ästhetischen Zusammenwirkens von Gesichtern und Kopffrisuren oder Bärten.

Bei der Auswahl einer neuen Haartracht, beispielsweise einer Kopffrisur oder eines Bartes stehen der Kunde bzw. die Kundin und der Friseur vor der Schwierigkeit, im vorhinein zu beurteilen, ob die jeweils ausgewählte Haartracht zu dem Gesichtstyp paßt oder nicht. Insbesondere den Kunden fehlt häufig das notwendige Vorstellungsvermögen, was dann trotz tadellos ausgeführter Frisur dazu führt, daß der Kunde mit dem erzielten Ergebnis unzufrieden ist und dies dem Friseur als schlechte Beratung anlastet.

Aufgabe der Erfindung ist es deshalb, einen Haartrachtsimulator zu schaffen, der es dem Friseur bzw. seinem Kunden im voraus ermöglicht, das künftige Aussehen zu beurteilen und festzustellen, ob die jeweils gewählte Haartracht zu dem Gesichtstyp paßt.

Zur Lösung dieser Aufgabe ist der erfindungsgemäße Haartrachtsimulator durch die Merkmale des Hauptanspruches gekennzeichnet.

Ein sehr vielseitiger Haartrachtsimulator besteht darin, daß die Einrichtung zur Aufnahme und Darstellung des jeweiligen Gesichtes eine elektronische Mischeinrichtung, eine an die Mischeinrichtung angeschlossene Videokamera zum Videografieren des Gesichtes, einen an die Mischeinrichtung angeschlossenen Fernsehmonitor sowie eine an die Mischeinrichtung angeschlossene und das Magazin zur Speicherung der Frisuren bildende Speichereinrichtung umfaßt, wobei in der Mischeinrichtung das von der Videokamera kommende Bild mit dem von der Speichereinrichtung kommenden Bild der Frisur gemischt und auf dem Fernsehmonitor dargestellt wird.

Damit der Kunde, der die neue Frisur beurteilen will, nicht ständig den Kopf ruhig halten muß, ist es günstig, wenn an die Mischeinrichtung eine zweite Speichereinrichtung zum Speichern des videografierten Gesichtes angeschlossen ist. Hierdurch wird erreicht, daß das Gesicht des Kunden nur einmal zu Beginn videografiert werden muß und der Kunde im übrigen sich wieder völlig frei bewegen kann. Hierbei besteht die Möglichkeit, die zweite Speichereinrichtung als Digitalspeicher auszuführen.

Für die erste Speichereinrichtung, in der die möglichen Frisuren enthalten sind, wird vorteilhafterweise ein Bildplattenspeicher mit Standbildwiedergabe verwendet, weil hierdurch ein schneller Zugriff auf die einzelnen Frisuren möglich ist. Falls es auf den schnellen Zugriff verschiedener Frisuren nicht so sehr ankommt, kann vorteilhafterweise als erste Speichereinrichtung ein Videobandgerät mit Standbildwiedergabe vorgesehen sein.

Eine sehr einfache Speichereinrichtung für die Frisuren ergibt sich, wenn die jeweiligen Frisuren auf farbigen Bildvorlagen enthalten sind, die mit einer Videokamera videografiert werden. Hierzu kann die erste Speichereinrichtung entweder eine zweite Videokamera enthalten oder es sind die Bildvorlagen mit der ersten Videokamera videografierbar.

Da die Gesichter jeweils unterschiedliche Größe aufweisen können, die Frisuren aber in der Größe entsprechend dem Inhalt der ersten Speichereinrichtung festliegen, ist es zweckmäßig, wenn in dem Haartrachtsimulator eine Einrichtung zur Größenanpassung von Gesicht und Frisur vorgesehen ist. Diese Einrichtung zur Größenanpassung kann ein an der ersten Videokamera vorgesehenes Zoomobjektiv oder einen in einem variablen Abstand vor der jeweiligen Videokamera positionierbaren Halter für die Bildvorlagen umfassen.

Wenn ein schneller Vergleich von in die engere Wahl gezogenen neuen Frisuren ermöglicht werden soll, ist an die Mischeinrichtung zweckmäßigerweise eine dritte Speichereinrichtung zur wahlweisen Aufzeichnung wenigstens eines auf dem Fernsehmonitor zur Darstellung gelangenden Bildes angeschlossen. Auch hierbei kann die dritte Speichereinrichtung vorteilhafterweise als Digitalspeicher ausgebildet sein.

-4-

Um nicht für jede Haarfarbe eine eigene Frisur speichern zu müssen, enthält die Mischeinrichtung eine Farbtonänderungseinrichtung für das von der ersten Speichereinrichtung kommende Bildsignal mit der Frisur.

Um eine Beurteilung der neuen Frisur auch im Profil oder im Halbprofil zu ermöglichen, kann an die Mischeinrichtung eine das jeweilige Gesicht im Profil oder Halbprofil videografierende Videokamera angeschlossen sein.

In der Zeichnung sind Ausführungsbeispiele des Gegenstandes der Erfindung dargestellt. Es zeigen:

Fig. 1    die räumliche Anordnung der Geräte eines
          Haartrachtsimulators gemäß der Erfindung
          in einer Draufsicht und in schematischer
          Darstellung,

Fig. 2    das Blockschaltbild eines Haartrachtsimulators gemäß der Erfindung mit einer Speichereinrichtung für das auf dem Fernsehmonitor
          darzustellende Bild und

Fig. 3    das Blockschaltbild eines weiteren Ausführungsbeispieles des Haartrachtsimulators gemäß der
          Erfindung mit einem Zwischenspeicher für das
          videografierte Gesicht und Bildvorlagen für
          die Frisur.

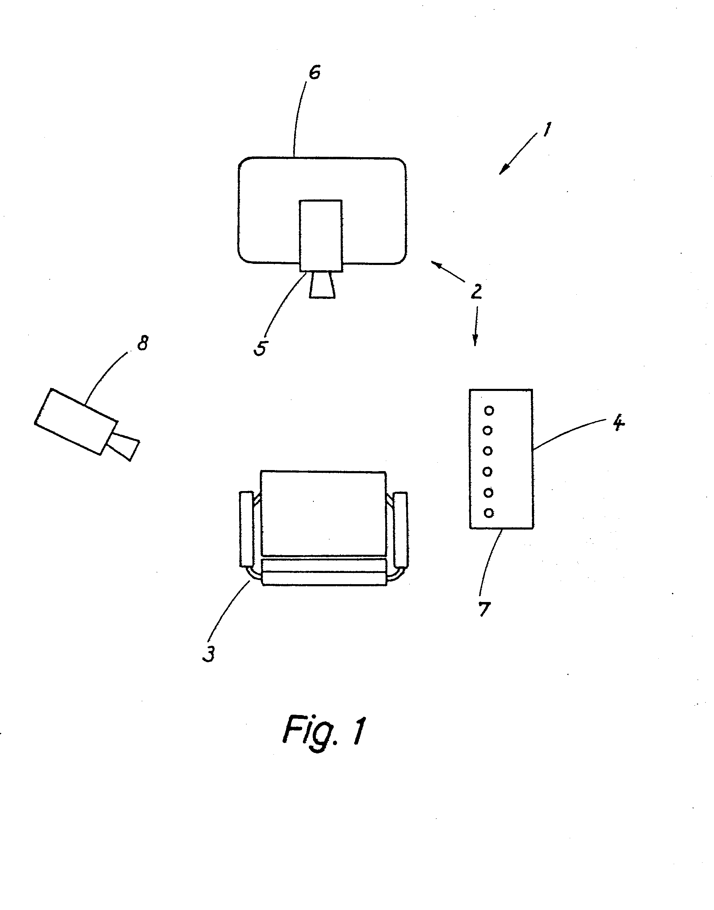

Der in Fig. 1 in einer Draufsicht veranschaulichte Haartrachtsimulator 1 enthält eine Einrichtung 2 zur Aufnahme und Darstellung des Gesichtes eines Friseurkunden, der in einem vor der Einrichtung 2 angeordneten Stuhl 3 Platz genommen hat. Die Einrichtung 2 zur Aufnahme und Darstellung des Gesichts des Friseurkunden umfaßt eine elektronische Mischeinrichtung 4, an die eine das Gesicht des Friseurkunden videografierende Farbvideokamera 5 angeschlossen ist. Mit der elektronischen Mischeinrichtung 4 ist ferner ein Farbfernsehmonitor 6 elektrisch verbunden, auf dem das videografierte Gesicht für den Friseurkunden sichtbar dargestellt wird. Schließlich umfaßt der Haartrachtsimulator 1 noch eine Speichereinrichtung 7, die ein Magazin zur Speicherung von auszuwählenden Haartrachten, wie Kopffrisuren oder Bärten, bildet und räumlich beispielsweise in dem Gehäuse der elektronischen Mischeinrichtung 4 untergebracht sein kann.

Der den Haartrachtsimulator 1 benutzende Friseurkunde nimmt in dem Stuhl 3 Platz, so daß mit Hilfe der Videokamera 5 dessen Gesicht aufgenommen werden kann. Die Videokamera 5 erzeugt hierbei ein elektrisches Signal, das der elektronischen Mischeinrichtung 4 zugeführt wird. In der elektronischen Mischeinrichtung 4 wird zu dem von der Videokamera 5 kommenden elektrischen Bild das Bild einer in der Speichereinrichtung 7 enthaltenen Frisur zugemischt, und zwar so, daß die Frisur lagerichtig, bezogen auf das Gesicht, angeordnet ist. Das auf diese Weise aus dem Bild von der Videokamera 5 und dem Bild von der Speichereinrichtung 7 zusammengemischte Bild wird auf dem Fernsehmonitor 6 dargestellt, so daß der Kunde das ästhetische Zusammenwirken seines Gesichtes mit der jeweils gewählten Haartracht bequem beurteilen kann.

Die lagerichtige Zentrierung der Frisur bezüglich des viedeografierten Gesichtes kann entweder auf elektrische Weise geschehen oder die Zentrierung kann dadurch erfolgen, daß die Videokamera 5 entsprechend verschwenkt wird.

Falls zusätzlich zur Frontalaufnahme auch noch das Zusammenwirken von Gesicht und Frisur im Profil oder Halbprofil beurteilt werden soll, kann der Haartrachtsimulator 1 eine weitere entsprechend seitlich neben dem Stuhl 3 angeordnete Videokamera 8 enthalten, mit der das Gesicht seitlich aufgenommen wird. Die Videokamera 8 ist ebenfalls an die elektronische Mischeinrichtung 4 angeschlossen, wo dem von der Videokamera 8 kommenden elektrischen Bild das Bild der jeweiligen Frisur aus der Speichereinrichtung 7 zugemischt wird. Es versteht sich, daß hierbei das in der Speichereinrichtung 7 enthaltene Bild von der Frisur ebenfalls im Halbprofil oder Profil, je nach der Anordnung der Videokamera 8, enthalten sein muß.

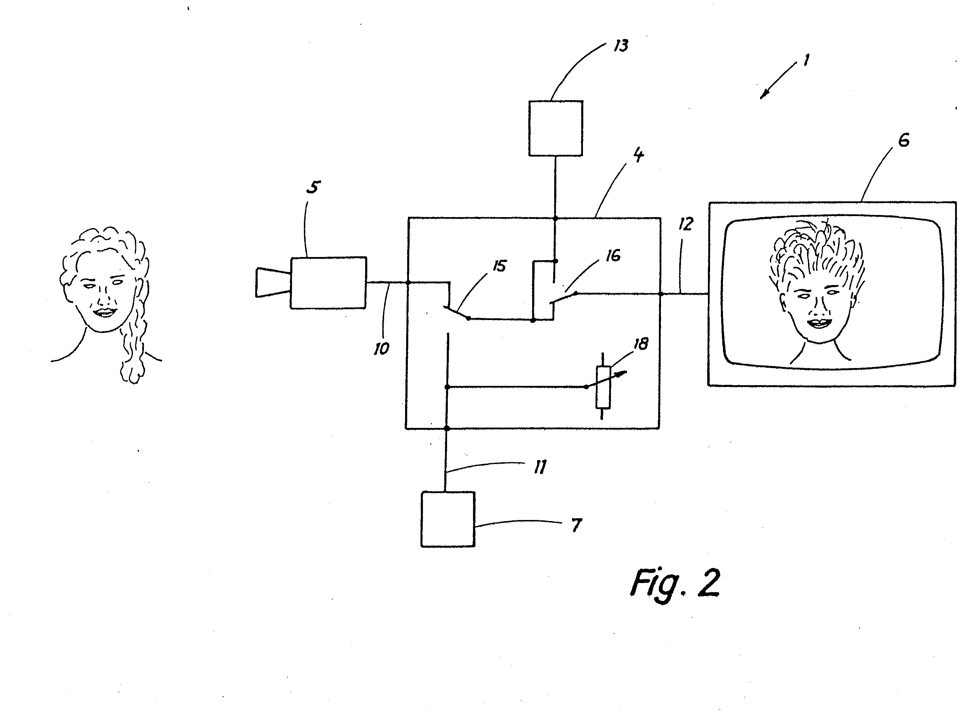

In Fig. 2 ist das Blockschaltbild des Haartrachtsimulators 1 nach Fig. 1 gezeigt, wobei in dem Blockschaltbild zur Kennzeichnung der einzelnen elektrischen Geräte dieselben Bezugszeichen verwendet sind, wie in Fig. 1.

An die elektronische Mischeinrichtung 4 ist über ein entsprechendes Kabel 10 die Videokamera 5 angeschlossen, die dem Stuhl 3 gegenüber angeordnet ist und das Gesicht von der Frontalen her aufnimmt. Über ein Kabel 11 ist die Speichereinrichtung 7 für die auswählbaren Frisuren angeschlossen, wobei die Speichereinrichtung 7 wahlweise ein Videobandgerät oder ein Bildplattenspeicher ist, die beide jeweils Standbildwiedergabe ermöglichen. Der Bildplattenspeicher hat gegenüber dem Videobandgerät den Vorteil, daß es möglich ist, gegebenenfalls auf die Bilder der Frisuren direkt zugreifen zu können, während der Zugriff auf die Bilder von Frisuren bei dem Videobandgerät nur sequentiell möglich ist, was gegebenenfalls größere Umspulzeiten erfordert. Dafür weist das Videobandgerät die Möglichkeit der leichteren Änderung der gespeicherten Frisuren auf, so daß der Friseur die Möglichkeit hat, eigene Frisurenentwürfe mit Hilfe des Haartrachtsimulators 1 in der Speichereinrichtung 7 abzuspeichern.

Über ein Kabel 12 ist an die elektronische Mischeinrichtung 4 der Fernsehmonitor 6 angeschlossen, auf dem das videografierte Gesicht mit der zugemischten Frisur von der Speichereinrichtung 7 dargestellt wird.

Zusätzlich enthält der in Fig. 1 im Blockschaltbild veranschaulichte Haartrachtsimulator 1 eine weitere Speichereinrichtung 13, mit der die auf dem Fernsehmonitor 6 zur Darstellung gelangenden Bilder abgespeichert werden können, so daß der Friseurkunde und der Friseur die Möglichkeit haben, ohne erneute Bildmischung die in die engere Wahl gezogenen Frisuren schnell miteinander zu vergleichen, indem die vorher auf der Speichereinrichtung 13 aufgezeichneten Monitorbilder erneut auf dem Fernsehmonitor 6 dargestellt werden.

Die elektronische Mischeinrichtung 4 enthält neben anderen Vorkehrungen zur Synchronisation der Videokamera 5 mit der Speichereinrichtung 7 und dem Fernsehmonitor 6 im wesentlichen einen elektronischen Schalter 15, der je nach der Strahllage beim Videografieren des Gesichtes mittels der Videokamera 5 entweder das elektrische Signal von der Videokamera 5 zu dem Fernsehmonitor 6 weiterleitet oder, sobald die Frisur dargestellt werden soll, auf die Speichereinrichtung 7 umschaltet.

In der Praxis erreicht man das Umschalten des elektronischen Schalters 15 mit dem Blaustanzverfahren in der Weise, daß beispielsweise die Frisur vor einem blauen Hintergrund videografiert und auf der Speichereinrichtung 7 aufgezeichnet wird. Die Abtastung des auf der Speichereinrichtung 7 abgelegten Bildes erfolgt zeilensynchron mit dem Videografieren des Gesichtes mittels der Videokamera 5, so daß die blaue Farbinformation des Hintergrundes des gespeicherten Frisurenbildes verwendet wird, um den elektronischen Schalter 15 in die eine oder in die andere Stellung umzuschalten, und zwar in der Weise, daß, wenn der blaue Hintergrund des gespeicherten Frisurenbildes abgetastet wird, der elektronische Schalter 15 in der Stellung steht, daß das elektrische Signal von der Videokamera 5 zu dem Fernsehmonitor 6 weitergeleitet wird, während, sobald die Abtastung der Frisur erfolgt, die eine andere Farbe als der blaue Hintergrund aufweist, der elektronische Schalter 15 in die andere Stellung gebracht wird, in der er das elektrische Signal von der Speichereinrichtung 7 zu dem Fernsehmonitor 6 gelangt.

Mit Hilfe eines Schalters 16, der dem Schalter 15 nachgeordnet ist, kann wahlweise das auf dem Fernsehmonitor 6 dargestellte Bild auf der Speichereinrichtung 13 aufgezeichnet werden oder es kann, wenn sich der Schalter 16 in der anderen als der gezeichneten Stellung befindet, das auf der Speichereinrichtung 16 abgelegte Bild wieder auf dem Fernsehmonitor 6 dargestellt werden.

Um nicht für jede Haarfarbe eine eigene Frisur in der Speichereinrichtung 7 aufbewahren zu müssen, enthält die elektronische Mischeinrichtung 4 eine Farbtonänderungseinrichtung 18, mit der die Farbe des von der Speichereinrichtung 7 kommenden Bildes und damit der dort gespeicherten Frisur in den erforderlichen Grenzen geändert werden kann.

Die lagerichtige Zentrierung der Frisur bezüglich des auf dem Fernsehmonitor 6 dargestellten Bildes erfolgt entweder innerhalb der elektronischen Mischeinrichtung auf elektronische Weise oder sehr einfach durch entsprechendes Verschwenken der Videokamera 5, wobei der Erfolg ohne weiteres auf dem Fernsehmonitor 6 beobachtet werden kann und das Verschwenken solange erfolgt, bis die Frisur relativ zu dem Gesicht die richtige Lage eingenommen hat.

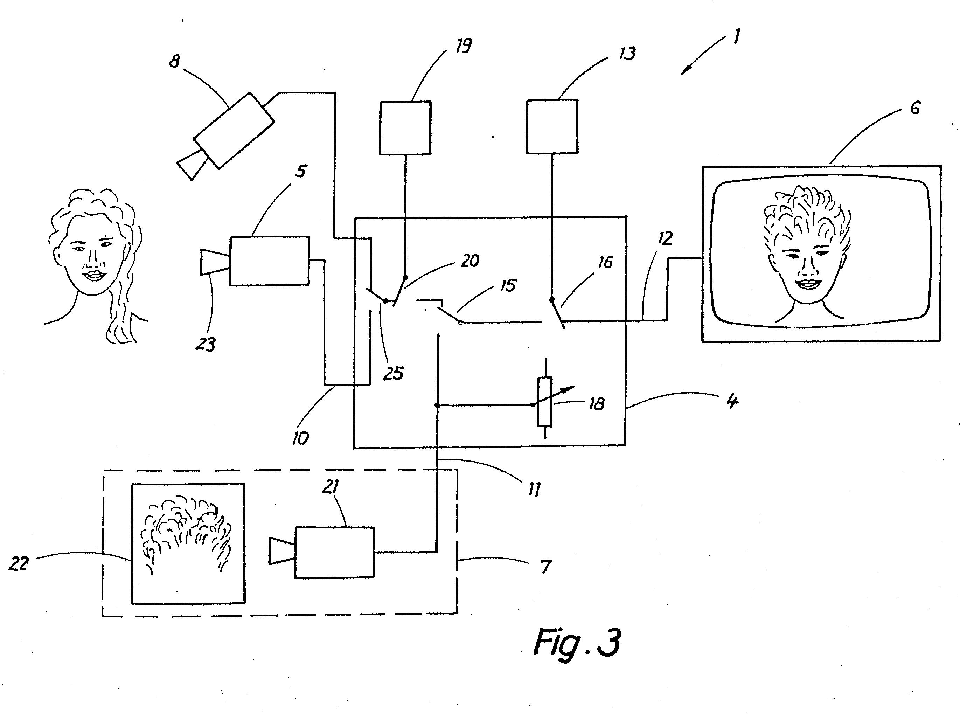

In Fig. 3 ist ein weiteres Ausführungsbeispiel des Haar-trachtsimulators 1 veranschaulicht, bei dem wiederum gleiche Bezugszeichen einander entsprechende Einrichtungen und Bauelemente wie in den Fig. 1 und 2 kennzeichnen.

Zum Unterschied gegenüber den vorher beschriebenen Ausführungsbeispielen enthält der Haartrachtsimulator 1 nach Fig. 3 eine weitere an die elektronische Mischeinrichtung 4 angeschlossene Speichereinrichtung 19, mit der das videografierte Gesicht zwischengespeichert werden kann, so daß nach einer einmaligen Aufzeichnung des Gesichtes der Kunde sich im übrigen wieder frei bewegen kann und nicht ständig den Kopf ruhig halten muß. Der elektrische Anschluß der Speichereinrichtung 19 erfolgt über einen elektronischen Schalter 20, der dem elektronischen Schalter 15 vorgeschaltet ist, so daß wahlweise die Aufzeichnung des von der Videokamera 5 kommenden Bildes möglich ist oder in der anderen Stellung des Schalters 20 das in der
Speichereinrichtung 19 abgelegte Bild in den elektronischen Schalter 15 eingespeist werden kann.

Die Speichereinrichtung 7 für die Frisuren besteht
bei dem Haartrachtsimulator 1 nach Fig. 3 aus einer
weiteren über die Leitung 11 an die elektronische Mischeinrichtung 4 angeschlossenen Videokamera 21, vor der
ein Halter oder Magazin für Bildvorlagen 22 von Frisuren
angeordnet ist. Das Magazin für die Bildvorlagen 22
kann hierbei in einem einfachen Gestell bestehen,
in dem farbige Drucke von Frisuren enthalten sind
oder es kann ein Diaprojektor sein, der die Bilder
von Frisuren auf eine Mattscheibe oder eine Leinwand projiziert, auf die die Videokamera 21 gerichtet ist.

Um die Größe der gespeicherten Frisuren an die jeweilige Gesichtsgröße anpassen zu können, kann entweder die das Gesicht videografierende Videokamera 5
mit einem Zoomobjektiv 23 versehen sein, mit dem in
bekannter Weise die Bildgröße variierbar ist oder
das Magazin kann in einem variablen Abstand vor
der Videokamera 21 angeordnet sein. Im ersteren Falle
wird bei dem Haartrachtsimulator 1 die Gesichtsgröße
verändert, während im zweiten Falle die Größe der Frisur einstellbar ist.

Um das Gesicht auch noch im Profil oder Halbprofil
mit der neuen Frisur beurteilen zu können, ist bei
dem Haartrachtsimulator 1 nach Fig. 3 eine weitere
Videokamera 8 an die elektronische Mischeinrichtung 4
angeschlossen, wobei dann über einen Schalter 25
die jeweilige Kamera 5 oder 8 ausgewählt wird.

Die Bedienung des Haartrachtsimulators 1 nach Fig. 3 geht folgendermaßen:

Wenn der Haartrachtsimulator 1 eine Speichereinrichtung 19 enthält, mit der das von der Videokamera 5 kommende Bild für die gesamte Dauer der Simulation zwischengespeichert werden kann, ist es möglich, die Videokameras 8 und 21 einzusparen, und stattdessen die Videokamera 5 zur Aufnahme des Halbprofils oder Profils des Gesichtes und daran anschließend zum Videografieren der Vorlagen der Frisuren zu verwenden.

Die Bedienung des Haartrachtsimulators 1 nach Fig. 3 geht folgendermaßen:

Der Friseurkunde nimmt in dem vor der Videokamera 5 angeordneten Stuhl 3 Platz und es wird mit Hilfe der Videokamera 5 das Gesicht des Kunden in der Frontalen, im Profil und im Halbprofil aufgenommen und entsprechend auf der Speichereinrichtung 19 gespeichert. Daran anschließend wird der elektronische Schalter 20 umgeschaltet und die Videokamera 5 in eine Position vor dem Magazin für die Bildvorlagen 22 gebracht, wie dies durch die Videokamera 21 angedeutet ist. Die Videokamera 5 nimmt nunmehr die Bildvorlagen 22 der Frisuren auf, wobei nun, wie oben beschrieben, das von der Videokamera 5 kommende Bild der Frisuren mit dem von der Speichereinrichtung 19 kommenden Bild des Gesichtes mit Hilfe des elektronischen Schalters 15 gemischt und auf dem Fernsehmonitor 6 dargestellt wird. Die Zentrierung der Frisur bezüglich des Gesichtes erfolgt durch entsprechendes Verschwenken der Videokamera 5 vor dem Magazin , so daß sich die relative Lage der Frisur ändert. Die Größeneinstellung derart, daß die Frisurgröße zur Gesichtsgröße paßt, erfolgt durch eine Änderung des Abstandes der Videokamera 5

von dem Magazin.

In dieser Weise werden nunmehr durch Auswechseln der Bildvorlagen 22 in dem Magazin verschiedene Frisuren mit demselben Gesicht auf dem Fernsehmonitor 6 dargestellt. Sobald der Kunde hierbei eine Frisur gefunden hat, die in die engere Wahl gezogen werden soll, wird diese auf dem Fernsehmonitor 6 dargestellte Kombination aus Gesicht und Frisur auf der Speichereinrichtung 13 abgespeichert und kann jederzeit wieder auf dem Fernsehmonitor 6 dargestellt werden.

Der Bedienungskomfort kann hierbei erleichtert werden, wenn die Einstellung der Videokamera 5 und des Zoomobjektivs 23 fernbedienbar ausgelegt ist, wobei die Bedienungsknöpfe in der Reichweite des auf dem Stuhl 3 sitzenden Kunden angeordnet sind.

Die Speichereinrichtungen 13 und 19 können vorteilhafterweise als Digitalspeicher ausgelegt sein.

-13-

Patentansprüche

1. Haartrachtsimulator für Friseure zur Beurteilung des ästhetischen Zusammenwirkens von Gesichtern und Kopffrisuren oder Bärten, mit einer der Aufnahme und Darstellung des jeweiligen Gesichtes dienenden Einrichtung, auf der gleichzeitig eine in einem Magazin gespeicherte Frisur lagerichtig bezüglich des Gesichts angeordnet darstellbar ist, sowie mit einer Einrichtung, durch die die Größe von Gesicht und Frisur aneinander anpaßbar sind, dadurch gekennzeichnet, daß die Einrichtung (2) zur Aufnahme und Darstellung des jeweiligen Gesichtes eine elektronische Mischeinrichtung (4), eine an die Mischeinrichtung (4) angeschlossene Videokamera (5, 8) zum Videografieren des Gesichtes, einen an die Mischeinrichtung (4) angeschlossenen Fernsehmonitor (6) sowie eine an die Mischeinrichtung (4) angeschlossene und das Magazin zur Speicherung der Frisuren bildende Speichereinrichtung (8) umfaßt und daß in der Mischeinrichtung (4) das von der Videokamera (5, 8) kommende Bild mit dem von der Speichereinrichtung (7) kommenden Bild der Frisur gemischt und auf dem Fernsehmonitor (6) darstellbar ist.

0092075

2. Haartrachtsimulator nach Anspruch 1, dadurch gekennzeichnet, daß an die Mischeinrichtung (4) eine zweite Speichereinrichtung (19) zum Speichern des videografierten Gesichtes angeschlossen ist.

3. Haartrachtsimulator nach Anspruch 1, dadurch gekennzeichnet, daß die zweite Speichereinrichtung (19) ein Digitalspeicher ist.

4. Haartrachtsimulator nach Anspruch 1, dadurch gekennzeichnet, daß die erste Speichereinrichtung (7) für die Frisuren ein Bildplattenspeicher mit Standbildwiedergabe ist.

5. Haartrachtsimulator nach Anspruch 1, dadurch gekennzeichnet, daß die erste Speichereinrichtung (7) für die Frisuren ein Videobandgerät mit Standbildwiedergabe ist.

6. Haartrachtsimulator nach Anspruch 1, dadurch gekennzeichnet, daß die erste Speichereinrichtung (7) für die Frisuren mit einer Videokamera (21) videografierbare Bildvorlagen (22) enthält.

7. Haartrachtsimulator nach Anspruch 6, dadurch gekennzeichnet, daß die erste Speichereinrichtung (7) für die Frisuren eine zweite Videokamera (21) enthält.

8. Haartrachtsimulator nach Anspruch 6, dadurch gekennzeichnet, daß die Bildvorlagen (22) mit der ersten Videokamera (5) videografierbar sind.

9. Haartrachtsimulator nach Anspruch 1,
dadurch gekennzeichnet, daß die Einrichtung zur
Größenanpassung ein an der ersten Videokamera
(5) vorgesehenes Zoomobjektiv (23) umfaßt.

10. Haartrachtsimulator nach den Ansprüchen 1 und 6,
dadurch gekennzeichnet, daß die Einrichtung zur
Größenanpassung einen in einem variablen Abstand
vor der jeweiligen Videokamera (5, 21) positionierbaren Halter für die Bildvorlagen (22) umfaßt.

11. Haartrachtsimulator nach Anspruch 1, dadurch gekennzeichnet, daß an die Mischeinrichtung (4)
eine dritte Speichereinrichtung (13) zur wahlweisen Aufzeichnung wenigstens eines auf dem
Fernsehmonitor (6) zur Darstellung gelangenden
Bildes angeschlossen ist.

12. Haartrachtsimulator nach Anspruch 11, dadurch gekennzeichnet, daß die dritte Speichereinrichtung
ein Digitalspeicher ist.

13. Haartrachtsimulator nach Anspruch 1, dadurch gekennzeichnet, daß die Mischeinrichtung (4) eine
Farbtonänderungseinrichtung (18) für die Farbe
der Frisur aufweist.

14. Haartrachtsimulator nach Anspruch 1, dadurch gekennzeichnet, daß an die Mischeinrichtung (4) ein
das jeweilige Gesicht im Profil oder Halbprofil
videografierende Videokamera (8) angeschlossen
ist.

1/3    0092075

Fig. 1

Fig. 2

Fig. 3

Europäisches Patentamt

**EUROPÄISCHER RECHERCHENBERICHT**  Nummer der Anmeldung

0092075

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | **EINSCHLÄGIGE DOKUMENTE** | | EP 83103142.2 |
| X | <u>DE - A1 - 3 002 388</u> (DAINIPPON SCREEN SEIZO K.K.)<br><br>* Fig. 5 *<br><br>-- | 1,5 | A 45 D 44/02<br><br>H 04 N 5/22 |
| A | <u>DE - A1 - 2 510 632</u> (FRAUNHOFER-GESELLSCHAFT ZUR FÖRDERUNG DER AN-GEWANDTEN FORSCHUNG E.V.)<br><br>* Fig. 1 *<br><br>-- | 1 | |
| A | <u>DE - B - 1 049 906</u> (COLUMBIA BROADCASTING SYSTEM, INC.)<br><br>* Fig. 1; Spalte 2, Zeile 29 - Spalte 3, Zeile 41 *<br><br>-- | | |
| A | <u>DE - C - 926 371</u> (PYE LIMITED)<br><br>* Fig.; Seite 2, Zeilen 12-90 *<br><br>---- | | |

**RECHERCHIERTE SACHGEBIETE (Int. Cl. ³)**

A 45 D

H 04 N

G 06 F

G 09 F

Der vorliegende Recherchenbericht wurde für alle Patentansprüche erstellt.

| Recherchenort | Abschlußdatum der Recherche | Prüfer |
|---|---|---|
| WIEN | 05-07-1983 | NETZER |